# FASCICULE DE BREVET EUROPEEN

(11) **EP 3 414 120 B1**
(45) Date de publication et mention de la délivrance du brevet: **19.08.2020**
(21) Numéro de dépôt: 17707371.5
(22) Date de dépôt: 31.01.2017
(51) Int. Cl.: B60K 1/00

(54) **DISPOSITIF DE SUPPORT D'UN COMPOSANT DE VÉHICULE AUTOMOBILE**
VORRICHTUNG ZUR LAGERUNG EINER KRAFTFAHRZEUGKOMPONENTE
DEVICE FOR SUPPORTING A MOTOR VEHICLE COMPONENT

(30) Priorité: 09.02.2016 FR 1651012
(43) Date de publication de la demande: 19.12.2018
(73) Titulaire: Renault S.A.S., 92100 Boulogne-Billancourt (FR)
(72) Inventeur: BLANC, Lionel, 92320 Chatillon (FR); LAFOY, Celine, 78210 Saint Cyr l'Ecole (FR)
(86) Numéro de dépôt international: PCT/FR2017/050212
(87) Numéro de publication internationale: WO 2017/137679

(56) Documents cités:
- EP-A1- 2 189 317
- WO-A1-2015/146267
- US-A1- 2011 162 902
- US-A1- 2012 015 257

## Description

### DOMAINE TECHNIQUE AUQUEL SE RAPPORTE L'INVENTION

La présente invention concerne de manière générale la protection de certains des organes d'un véhicule automobile en cas de collision, notamment en cas de choc frontal.

Elle concerne plus particulièrement un dispositif de support d'un composant de véhicule automobile.

Elle concerne également un véhicule automobile comportant un tel dispositif de support.

### ARRIERE-PLAN TECHNOLOGIQUE

En cas de collision d'un véhicule contre un quelconque obstacle, il peut arriver que plusieurs organes du véhicule se percutent, notamment lorsque le châssis du véhicule s'écrase pour absorber l'énergie du choc.

C'est notamment le cas des organes situés dans le compartiment moteur, en cas de choc frontal.

Ces organes, souvent très raides, risquent de s'empiler les uns sur les autres, créant un grand volume incompressible dans le compartiment moteur. Ceci est problématique pour la protection de l'occupant.

En effet, un grand volume incompressible dans le compartiment moteur va limiter l'écrasement de l'avant du véhicule. Ceci a deux conséquences principales.

D'une part, l'avant du véhicule absorbera moins d'énergie, qui sera alors transférée à l'habitacle. L'habitacle se déformera donc plus que souhaité (pour rappel, l'habitacle est la « cage de survie » de l'occupant).

D'autre part, ces organes empilés les uns sur les autres de façon incompressible risquent d'entrer dans la partie avant de l'habitacle, ce qui génère un risque pour l'occupant.

Pour améliorer le comportement des organes les uns par rapport aux autres dans le compartiment moteur, on connaît du document JP2006088871 un système de fixation particulier d'un groupe motopropulseur au châssis du véhicule. Dans ce système de fixation, certains éléments sont conçus pour rompre en cas de choc, de manière que, lors d'une collision frontale, le groupe motopropulseur puisse basculer autour d'un axe de pivot pour ne pas être endommagé. Malheureusement, compte tenu du nombre important d'organes présents sous le capot du véhicule, il n'est pas toujours possible de disposer de suffisamment d'espace pour utiliser ce système de fixation.

Ce système de fixation s'avère en outre onéreux à mettre en œuvre.

Le document US2011162902 décrit un support pour un système onduleur comportant une équerre et un bras latéral, conçu pour installer le système onduleur au-dessus de la transmission d'un véhicule et pour absorber les chocs.

Le document US2012015257 décrit un véhicule automobile comportant un onduleur. Celui-ci comporte une partie avant inclinée protégée par une plaque de protection également inclinée. Cette plaque de protection vissée sur l'onduleur permet de dévier vers le bas les éléments du véhicule qui viendraient la percuter lors d'un accident.

### OBJET DE L'INVENTION

La présente invention propose alors un dispositif de support d'un composant de véhicule automobile, dans lequel il est prévu :
- une platine qui est équipée de moyens d'assujettissement dudit composant, et de moyens de fixation à un élément structurel du véhicule automobile, lesdits moyens de fixation étant conçus pour rompre en cas de collision du véhicule automobile, et
- un déflecteur qui forme une rampe inclinée vers le haut, dont une partie d'extrémité s'étend à hauteur de la platine et dont une extrémité opposée est inclinée par rapport à la platine.

Ainsi, grâce à l'invention, en cas de choc, la platine et le composant qu'elle supporte vont se détacher de l'élément structurel, vont venir glisser contre le déflecteur puis vont être éjectés par la rampe.

Le déflecteur va permettre ainsi d'éviter l'empilage du composant avec les autres composants du véhicule dans le compartiment moteur.

Ainsi, ce moyen de support pourra être utilisé pour participer à la protection de l'occupant.

D'autres caractéristiques avantageuses et non limitatives du dispositif de support conforme à l'invention sont les suivantes :
- lesdits moyens de fixation sont prévus pour rompre lorsque le dispositif de support subit un effort supérieur à un seuil prédéterminé ;
- lesdits moyens de fixation comportent au moins un rivet ;
- lesdits moyens de fixation sont adaptés, en cas de rupture, à libérer totalement la platine de l'élément structurel du châssis ;
- la platine est majoritairement plane et présente au moins un bord replié à angle droit.

L'invention concerne également un véhicule automobile comportant :
- des éléments structurels (de châssis, du groupe motopropulseur, ...),
- un composant comprenant un boîtier de protection, et
- un dispositif de support tel que précité, dont les moyens d'assujettissement sont fixés audit boîtier de protection et dont les moyens de fixation sont fixés à l'un desdits éléments structurels.

Avantageusement, le déflecteur est fixé à, ou vient de formation avec, un élément structurel du véhicule qui est distinct de l'élément structurel auquel est fixée la platine.

Avantageusement encore, le véhicule comprend au moins un moteur électrique de traction du véhicule automobile, et ledit « composant » comprend une unité électronique de puissance, adaptée à piloter l'intensité du courant transmis au moteur électrique.

Préférentiellement, il est prévu des moyens de freinage permettant de freiner le véhicule automobile, dont une partie au moins est située derrière le déflecteur (à l'opposé du boîtier de protection).

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un composant de véhicule automobile fixé sur un dispositif de support conforme à l'invention ;
- la figure 2 est une vue schématique en perspective du dispositif de support de la figure 1 ; et
- la figure 3 est une vue schématique en perspective de la platine du dispositif de support de la figure 1, représentée sous un autre angle.

Classiquement, un véhicule automobile comporte des roues et un châssis qui supporte notamment un groupe motopropulseur, des éléments de transmission du couple depuis le groupe motopropulseur jusqu'aux roues motrices, un système de freinage, des éléments de carrosserie et des éléments d'habitacle.

On pourra ici considérer que le groupe motopropulseur du véhicule automobile est soit électrique (c'est-à-dire dépourvu de moteur à combustion interne) soit hybride (c'est-à-dire comportant un moteur électrique et un moteur à combustion interne).

Dans ces deux cas, le groupe motopropulseur comporte alors une chaîne de traction électrique qui comprend au moins un moteur électrique, une batterie d'accumulateurs (appelée batterie de traction) et une unité électronique de puissance.

Cette unité électronique de puissance est prévue pour piloter l'intensité du courant transmis au moteur électrique par la batterie de traction.

Elle comporte en outre un convertisseur de tension continue (DC-DC) permettant d'abaisser la tension aux bornes de la batterie de traction (qui est généralement supérieure à 300 V) à une tension égale à celle du réseau basse tension du véhicule (généralement de l'ordre de 14 V).

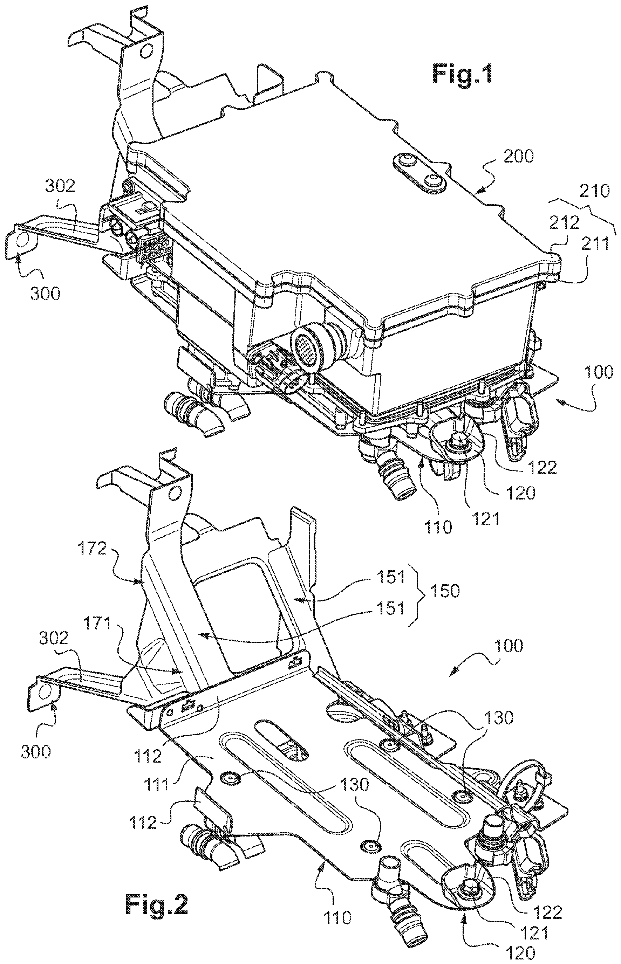

Sur la figure 1, on a représenté un composant particulier du véhicule automobile, à savoir cette unité électronique de puissance 200. Comme le montre cette figure, l'unité électronique de puissance 200 comporte un boîtier 210 qui loge et protège les composants électroniques (non visibles) de l'unité électronique de puissance 200.

Ce boîtier 210 est ici composé d'un socle 211 et d'un couvercle 212 qui ferme le socle 211.

Dans la suite de la description, les termes « avant » et « arrière » seront utilisés par rapport au véhicule automobile, l'arrière d'un élément désignant le côté de cet élément qui est tourné vers le coffre du véhicule et l'avant désignant le côté opposé.

On considérera ici que l'unité électronique de puissance 200 est située dans le compartiment moteur du véhicule, à l'avant d'un composant du système de freinage du véhicule.

On comprend alors qu'en cas de collision frontale, lorsque le châssis du véhicule s'écrase pour absorber l'énergie du choc, le risque est que le boîtier 210 de l'unité électronique de puissance 200 vienne percuter l'organe de frein, créant alors un fort volume incompressible dans le compartiment moteur, venant déformer de façon défavorable l'habitacle.

Selon une caractéristique particulièrement avantageuse de l'invention, comme le montre la figure 2, ce dispositif de support 100 comporte deux éléments principaux, à savoir une platine 110 et un déflecteur 150. La platine 110 comprend des moyens d'assujettissement 120 pour retenir le boîtier 210 de l'unité électronique de puissance 200, et des moyens de fixation 130 pour se fixer à un élément structurel du véhicule, qui sont conçus pour rompre en cas de collision. Le déflecteur 150 forme quant à lui une rampe dont une partie d'extrémité 171 s'étend à hauteur de la platine 110 et dont une extrémité opposée 172 est inclinée par rapport à la platine 110.

Dans le mode de réalisation représenté sur les figures, la platine 110 est majoritairement plane. Elle est formée par une plaque qui comprend un fond 111 sensiblement rectangulaire, dont une partie au moins de l'un au moins des bords est repliée à angle droit (avec un rayon non nul provenant d'un pliage arrondi) vers le haut, pour former un rebord 112.

Ici, le bord avant du fond 111 de la platine 110 est entièrement replié à angle droit vers le haut, et le bord gauche de ce fond comporte une partie repliée à angle droit vers le haut.

Tandis que le fond 111 forme un socle pour le boîtier 210 de l'unité électronique de puissance 200, les rebords 112 forment des butées permettant de maintenir le boîtier en place. Le rebord 112 situé à l'arrière de la platine 110 est particulièrement important puisqu'en cas de collision frontale, il empêche le boîtier de glisser par rapport à la platine 110.

Les moyens d'assujettissement 120 du boîtier 210 de l'unité électronique de puissance 200 sur la platine 110 pourraient se présenter sous des formes très diverses.

Comme le montre la figure 1, ils comportent ici une vis 121 qui traverse un trou pratiqué dans la platine 110 et qui est vissée dans un écrou (non visible) situé sous la platine 110. Ils comportent également une patte 122 qui est adaptée à plaquer une partie du boîtier 210 contre la platine 110.

Comme le montre la figure 2, ces moyens d'assujettissement 120 comprennent également des trous pratiqués dans la platine 110, et qui permettent d'y crocheter le boîtier 210 avant le vissage de la vis 121.

Les moyens de fixation 130 de la platine 110 au châssis 300 pourraient également se présenter sous des formes assez diverses, pour autant qu'ils rompent en cas de choc.

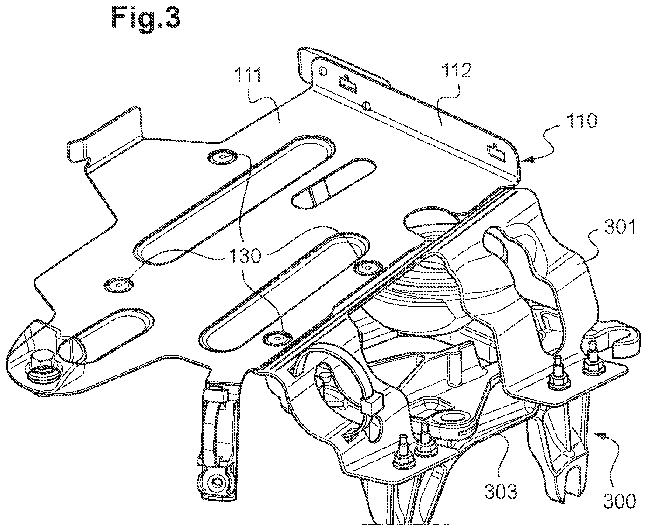

Comme le montre la figure 3, ces moyens de fixation 130 sont ici formés par quatre rivets.

Ces rivets 130 permettent de fixer la platine 110 à un élément structurel 301 composant le châssis 300 du véhicule. Cet élément structurel 301 est ici formé par une tôle rigide boulonnée sur le support-moteur 303.

Les rivets 130 sont engagés au travers d'ouvertures prévues dans le fond 111 de la platine 110 de manière que leurs têtes s'appuient sur le dessus de la platine 110 et que leurs tiges puissent s'accrocher sous l'élément structurel 301.

Ces rivets 130 sont prévus pour rompre lorsque le dispositif de support 100 subit une décélération supérieure à un seuil prédéterminé. Ce seuil sera de préférence supérieur ou égal à 10 m.s⁻².

De cette manière, en cas de collision peu violente, les rivets 130 sont prévus pour ne pas céder, de sorte que le boîtier 210 de l'unité électronique de puissance 200 reste solidement fixé au châssis du véhicule.

En revanche, en cas de collision plus violente, les quatre rivets 130 sont prévus pour céder de manière à libérer complètement la platine 110 de l'élément structurel 301.

Le déflecteur 150, qui est prévu pour dévier le boîtier 210 de sa trajectoire en cas de choc, pourrait se présenter sous diverses formes. Il pourrait ainsi se présenter sous la forme d'une plaque plane ou d'une plaque incurvée.

Toutefois, ici, comme le montre la figure 2, le déflecteur 150 est composé de trois tôles embouties 151 puis soudées.

Cet assemblage de 3 tôles embouties 151 soudées est vissé au châssis.

Cet assemblage forme alors une rampe prévue pour dévier, en cas de collision frontale, la platine 110 et le boitier 210 de leurs trajectoires naturelles.

Cette rampe présente à cet effet une première extrémité 171 qui s'étend au niveau ou en dessous du bord avant de la platine 110, tandis que la seconde extrémité 172 de la rampe s'étend à une hauteur supérieure.

Par conséquent, en cas de choc violent, lorsque les rivets 130 cèdent, le bord arrière de la platine 110 est prévu pour coulisser le long de la rampe vers la seconde extrémité 172, ce qui permet l'éjection de la platine 110 au-dessus du déflecteur 150, en direction de l'habitacle.

De manière préférentielle, l'élément structurel 302 auquel est fixé le déflecteur 150 est distinct de l'élément structurel 301 auquel est fixée la platine 110. En effet l'élément structurel 302 est solidaire du châssis 300 du véhicule, alors que l'élément 301 est solidaire d'un support du moteur, ou cadre moteur, qui est découplé du châssis par des moyens antivibratoires.

De cette manière, en cas de choc, lorsque le châssis 300 s'écrase, les deux éléments structurels 301, 302 (situés l'un à l'avant de l'autre) se rapprochent, ce qui favorise l'éjection de la platine 110.

Durant ce choc, la rampe peut même venir forcer l'avant de la platine 110 à se soulever, de manière à contraindre les rivets 130 à céder.

## Revendications

1. Dispositif de support (100) pour un composant (200) d'un véhicule automobile, comportant :
- une platine (110) qui est équipée de moyens d'assujettissement (120) aptes à assujettir ledit composant (200), et de moyens de fixation (130) aptes à fixer ladite platine à un élément structurel (301) du véhicule automobile,
- un déflecteur (150) qui forme une rampe dont une partie d'extrémité (171) s'étend à hauteur de la platine (110) et dont une extrémité opposée (172) est inclinée par rapport à la platine (110),
ledit dispositif de support étant **caractérisé en ce que** lesdits moyens de fixation (130) sont conçus pour rompre en cas de collision du véhicule automobile, et **en ce que** ladite rampe est inclinée vers le haut.

2. Dispositif de support (100) selon la revendication précédente, dans lequel lesdits moyens de fixation (130) sont prévus pour rompre lorsque le dispositif de support (100) subit un effort supérieur à un seuil prédéterminé.

3. Dispositif de support (100) selon l'une des revendications précédentes, dans lequel lesdits moyens de fixation (130) comportent au moins un rivet.

4. Dispositif de support (100) selon l'une des revendications précédentes, dans lequel lesdits moyens de fixation (130) sont adaptés, en cas de rupture, à libérer totalement la platine (110) dudit élément structurel (300).

5. Dispositif de support (100) selon l'une des revendications précédentes, dans lequel la platine (110) est majoritairement plane et présente au moins un bord (112) replié à angle droit.

6. Véhicule automobile comportant :
- des éléments structurels (301, 302), et
- un composant (200) comprenant un boîtier de protection (210),
**caractérisé en ce qu'**il comporte un dispositif de support (100) tel que défini dans l'une des revendications précédentes, dont les moyens d'assujettissement (120) sont fixés au boîtier de protection (210) du composant (200) et dont les moyens de fixation (130) sont fixés à l'un desdits éléments structurels (301).

7. Véhicule automobile selon la revendication précédente, dans lequel le déflecteur (150) est fixé à, ou vient de formation avec, un élément structurel (302) qui est distinct de l'élément structurel (301) auquel est fixée la platine (110).

8. Véhicule automobile selon l'une des deux revendications précédentes, dans lequel il est prévu au moins un moteur électrique de traction du véhicule automobile, et dans lequel ledit composant (200) comprend une unité électronique de puissance, adaptée à piloter l'intensité du courant transmis au moteur électrique.

9. Véhicule automobile selon l'une des trois revendications précédentes, dans lequel il est prévu des moyens de freinage permettant de freiner le véhicule automobile, dont une partie au moins est située derrière le déflecteur (150).

## Patentansprüche

1. Tragvorrichtung (100) für ein Bauteil (200) eines Kraftfahrzeugs, die aufweist:
- eine Platte (110), die mit Befestigungseinrichtungen (120), die das Bauteil (200) befestigen können, und mit Fixierungseinrichtungen (130) ausgestattet ist, die die Platte an einem Strukturelement (301) des Kraftfahrzeugs fixieren können,
- ein Ablenkblech (150), das eine Rampe formt, von der ein Endbereich (171) sich auf der Höhe der Platte (110) erstreckt und ein gegenüberliegendes Ende (172) bezüglich der Platte (110) geneigt ist,
wobei die Tragvorrichtung **dadurch gekennzeichnet ist, dass** die Fixierungseinrichtungen (130) konzipiert sind, im Fall eines Zusammenstoßes des Kraftfahrzeugs zu brechen, und dass die Rampe nach oben geneigt ist.

2. Tragvorrichtung (100) nach dem vorhergehenden Anspruch, wobei die Fixierungseinrichtungen (130) vorgesehen sind zu brechen, wenn die Tragvorrichtung (100) eine über einer vorbestimmten Schwelle liegende Kraft erfährt.

3. Tragvorrichtung (100) nach einem der vorhergehenden Ansprüche, wobei die Fixierungseinrichtungen (130) mindestens einen Niet aufweisen.

4. Tragvorrichtung (100) nach einem der vorhergehenden Ansprüche, wobei die Fixierungseinrichtungen (130) im Fall des Brechens geeignet sind, die Platte (110) vollständig vom Strukturelement (300) freizugeben.

5. Tragvorrichtung (100) nach einem der vorhergehenden Ansprüche, wobei die Platte (110) zum größten Teil eben ist und mindestens einen im rechten Winkel umgebogenen Rand (112) aufweist.

6. Kraftfahrzeug, das aufweist:
- Strukturelemente (301, 302), und
- ein Bauteil (200), das ein Schutzgehäuse (210) enthält,
**dadurch gekennzeichnet, dass** es eine wie in einem der vorhergehenden Ansprüchen definierte Tragvorrichtung (100) aufweist, deren Befestigungseinrichtungen (120) am Schutzgehäuse (210) des Bauteils (200) fixiert sind, und dessen Fixierungseinrichtungen (130) an einem der Strukturelemente (301) fixiert sind.

7. Kraftfahrzeug nach dem vorhergehenden Anspruch, wobei das Ablenkblech (150) an einem Strukturelement (302) fixiert oder mit ihm geformt ist, das sich von dem Strukturelement (301) unterscheidet, an dem die Platte (110) fixiert ist.

8. Kraftfahrzeug nach einem der zwei vorhergehenden Ansprüche, wobei mindestens ein elektrischer Fahrmotor des Kraftfahrzeugs vorgesehen ist, und wobei das Bauteil (200) eine elektronische Leistungseinheit enthält, die geeignet ist, die Stärke des an den elektrischen Motor übertragenen Stroms zu steuern.

9. Kraftfahrzeug nach einem der drei vorhergehenden Ansprüche, wobei Bremseinrichtungen vorgesehen sind, die es ermöglichen, das Kraftfahrzeug zu bremsen, von denen mindestens ein Teil sich hinter dem Ablenkblech (150) befindet.

## Claims

1. Support device (100) for supporting a motor vehicle component (200), comprising:
- a mounting plate (110) which is equipped with securing means (120) able to secure said component (200) and with fastening means (130) able to fasten said mounting plate to a structural element (301) of the motor vehicle,
- a deflector (150) which forms a ramp, an end part (171) of which extends at the height of the mounting plate (110) and an opposite end (172) of which is inclined with respect to the mounting plate (110).

2. Support device (100) according to the preceding claim, in which said fastening means (130) are intended to break when the support device (100) experiences a force above a predetermined threshold.

3. Support device (100) according to either of the preceding claims, in which said fastening means (130) comprise at least one rivet.

4. Support device (100) according to one of the preceding claims, in which said fastening means (130) are adapted, in the event of breakage, to fully release the mounting plate (110) from said structural element (300).

5. Support device (100) according to one of the preceding claims, in which the mounting plate (110) is for the most part planar and has at least one edge (112) folded at a right angle.

6. Motor vehicle comprising:
- structural elements (301, 302), and
- a component (200) comprising a protective casing (210),
**characterized in that** it comprises a support device (100) as defined in one of the preceding claims, the securing means (120) of which are fastened to the protective casing (210) of the component (200) and the fastening means (130) of which are fastened to one of said structural elements (301).

7. Motor vehicle according to the preceding claim, in which the deflector (150) is fastened to, or is integrally formed with, a structural element (302) which is separate from the structural element (301) to which the mounting plate (110) is fastened.

8. Motor vehicle according to one of the two preceding claims, in which there is provided at least one electric traction motor of the motor vehicle, and in which said component (200) comprises an electronic power unit adapted to control the intensity of the current transmitted to the electric motor.

9. Motor vehicle according to one of the three preceding claims, in which there are provided braking means for braking the motor vehicle, at least a part of which is situated behind the deflector (150).
